# EUROPEAN PATENT APPLICATION

(11) **EP 4 772 083 A1**
(43) Date of publication of application: **08.07.2026**
(21) Application number: 24893096.8
(22) Date of filing: 17.10.2024
(51) Int. Cl.: A47J 31/44, A47J 31/46, F25D 23/12

(54) **BEVERAGE DISPENSING DEVICE**

(30) Priority: 24.11.2023 CN 202323216710 U
(71) Applicant: Hubei Midea Refrigerator Co., Ltd., Jingzhou, Hubei 434000 (CN)
(72) Inventor: HUANG, Fanbin, Jingzhou, Hubei 434000 (CN); WU, Jirong, Jingzhou, Hubei 434000 (CN); LIU, Dongxian, Jingzhou, Hubei 434000 (CN); HUANG, Wei, Jingzhou, Hubei 434000 (CN); ZHOU, Ze, Jingzhou, Hubei 434000 (CN); SHEN, Fangdong, Jingzhou, Hubei 434000 (CN); LIU, Chuanlan, Jingzhou, Hubei 434000 (CN)
(74) Representative: Ran, Handong
(86) International application number: PCT/CN2024/125542
(87) International publication number: WO 2025/107937

(57) **Abstract**

The present application relates to a beverage dispensing device. The beverage dispensing device comprises a beverage outlet and a moving assembly. The beverage outlet is used for dispensing a beverage to a container, wherein the beverage comprises a first type of beverage ingredients and/or a second type of beverage ingredients. The moving assembly is connected to the beverage outlet. The moving assembly is used for driving the beverage outlet to be close to or away from the container. The moving assembly drives the beverage outlet to be close to or away from the container, so that during a process in which a user retrieves the first type of beverage ingredients and/or the second type of beverage ingredients, splashing or overflowing of the first type of beverage ingredients and/or the second type of beverage ingredients can be prevented, thereby avoiding affecting the user experience; and when the user finishes retrieving the first type of beverage ingredients and/or the second type of beverage ingredients, the user's hand is prevented from touching the beverage outlet, thereby ensuring that the user experience is not affected.

## Description

The present application claims priority to Chinese Patent Application No. 2023232167101, filed on November 24, 2023, entitled "BEVERAGE DISPENSING DEVICE", the contents of which are herein incorporated by reference in its entirety.

### TECHNICAL FIELD

The present disclosure relates to the field of beverage devices, and in particular to a beverage dispensing device.

### BACKGROUND

In an existing beverage dispensing device, there may usually be a certain distance between a beverage outlet and a container, such that it may easily cause a beverage to splash when the beverage is dispensed from the outlet into the container, which may affect the user experience.

### SUMMARY OF THE DISCLOSURE

Some embodiments of the present disclosure may provide a beverage dispensing device, so as to solve the technical problem of a beverage splashing when the beverage is dispensed.

In order to solve the above-mentioned technical problem, a technical solution adopted by some embodiments of the present disclosure may be to provide a beverage dispensing device. The beverage dispensing device may include a beverage outlet, configured to dispense a beverage to a container, where the beverage may include at least one of a first type of beverage ingredient and a second type of beverage ingredient; and a moving assembly, connected to the beverage outlet, where the moving assembly may be configured to drive the beverage outlet to move close to or away from the container.

In some embodiments, the beverage outlet may have a movement track extending along a first direction. In a case where the container is placed below the beverage outlet, the movement track may have a first end close to the container and a second end away from the container in the first direction.

In some embodiments, the moving assembly may include a first sleeve group including at least two first sleeves sleeved hierarchically. A corresponding one of the at least two first sleeves disposed at the outermost side or a corresponding one of the at least two first sleeves disposed at the innermost side may be fixedly disposed at the second end. The remaining ones of the at least two first sleeves may be movable along the first direction to perform telescopic movement. The first sleeve fixedly disposed at the second end may be a first fixed sleeve. A first sleeve of the first sleeve group that may be away from the first fixed sleeve may be a first movable sleeve. The beverage outlet may be disposed on the first movable sleeve.

In some embodiments, a delivery channel may be defined inside the first sleeve group. The beverage outlet may include an outlet for the first type of beverage ingredient. The outlet for the first type of beverage ingredient may be defined at a bottom of the first movable sleeve.

In some embodiments, in a case where the first sleeve group is in an extended state, an inner diameter of the delivery channel may be gradually increased or decreased in a direction close to the beverage outlet.

In some embodiments, the moving assembly may further include a second sleeve group, sleeved outside the first sleeve group. The second sleeve group may include at least two second sleeves sleeved hierarchically. A corresponding one of the at least two second sleeves disposed at the outermost side or a corresponding one of the at least two second sleeves disposed at the innermost side may be fixedly disposed at the second end. The remaining ones of the at least two second sleeves may be movable along the first direction. The corresponding one of the at least two second sleeves fixedly disposed at the second end may be a second fixed sleeve. A second sleeve of the second sleeve group that may be farthest from the second fixed sleeve may be a second movable sleeve. The second movable sleeve may be relatively fixed to the first movable sleeve.

In some embodiments, the at least two first sleeves and the at least two second sleeves may be arranged in one-to-one correspondence. The beverage dispensing device may further include at least two connecting plates. The at least two connecting plates, the at least two first sleeves, and the at least two second sleeves may be arranged in one-to-one correspondence. A corresponding one of the at least two connecting plates may be connected to a corresponding one of the at least two first sleeves and a corresponding one of the at least two second sleeves. Alternatively, a corresponding one of the at least two connecting plates may be integrally formed with a corresponding one of the at least two first sleeves and a corresponding one of the at least two second sleeves.

In some embodiments, the beverage outlet may further include an outlet for the second type of beverage ingredient. The beverage dispensing device may further include a dispensing pipe. The outlet for the second type of beverage ingredient may be defined at an output end of the dispensing pipe. The output end of the dispensing pipe may be relatively fixed to the first movable sleeve or the second movable sleeve.

In some embodiments, the dispensing pipe may be disposed at an inner side or an outer side of the first sleeve group. Alternatively, an embedding groove may be defined on the first sleeve group. The dispensing pipe may be embedded in the embedding groove.

In some embodiments, the beverage dispensing device may further include a bearing frame configured to support the first sleeve group and the second sleeve group. The moving assembly may further include a driving mechanism configured to drive the first sleeve group to be movable along the first direction. The driving mechanism may include: a guide rail, disposed on the bearing frame and extending along the first direction; a sliding block, movably disposed on the guide rail along the first direction, where the sliding block may be relatively fixed to the second movable sleeve; and a power member, configured to drive the sliding block to move.

In some embodiments, the power member may include: a lifting rack, extending along the first direction and relatively fixed to the sliding block; a driving gear, engaged with the lifting rack; and a motor, disposed on the bearing frame. An output end of the motor may be connected to the driving gear.

In some embodiments, the beverage dispensing device may further include a bearing frame configured to support the first sleeve group and the second sleeve group. The moving assembly may further include: a guide rail, disposed on the bearing frame and extending along the first direction; a sliding block, movably disposed on the guide rail along the first direction, where the sliding block may be relatively fixed to the second movable sleeve; a damping screw, threadedly connected to the sliding block and configured to abut against the guide rail to adjust an interaction force between the damping screw and the guide rail.

In some embodiments, the moving assembly may further include a handle disposed at an outer side wall of the corresponding one of the at least two second sleeves disposed at the innermost side.

In some embodiments, the beverage dispensing device may further include a bearing platform configured to carry the container. The container may be configured to receive the beverage, and the beverage outlet may be disposed above the bearing platform.

According to some embodiments of the present disclosure, the beverage outlet may be configured to dispense the beverage to the container, the moving assembly may be connected to the beverage outlet, and the moving assembly may be configured to drive the beverage outlet to move close to or away from the container. In the arrangement of the structure, the beverage outlet may be driven to move close to or away from the container through the moving assembly, such that it may be possible to prevent the at least one of the first type of beverage ingredient and the second type of beverage ingredient from splashing or overflowing when the user takes/retrieves the at least one of the first type of beverage ingredient and the second type of beverage ingredient, thereby improving the user experience. In addition, it may also be possible to prevent the user's hand from touching the beverage outlet after the user finishes taking the at least one of the first type of beverage ingredient and the second type of beverage ingredient, thereby improving the user's experience.

### BRIEF DESCRIPTION OF THE DRAWINGS

In order to more clearly illustrate technical solutions in embodiments of the present disclosure, accompanying drawings used in the embodiments may be briefly introduced below. Obviously, the accompanying drawings in the following description show only some of the embodiments of the present disclosure, and any ordinary skilled person in the art may obtain other accompanying drawings based on these drawings without creative work.
FIG. 1 is a front structural schematic view of a beverage dispensing device according to some embodiments of the present disclosure.
FIG. 2 is a bottom structural schematic view of the beverage dispensing device according to some embodiments of the present disclosure.
FIG. 3 is a front structural schematic view of a beverage outlet of the beverage dispensing device in an extended state according to some embodiments of the present disclosure.
FIG. 4 is a partial structural schematic view of the beverage outlet of the beverage dispensing device in the extended state according to some embodiments of the present disclosure.
FIG. 5 is a rear structural schematic view of the beverage dispensing device according to some embodiments of the present disclosure.
FIG. 6 is a rear structural schematic view of the beverage dispensing device according to some embodiments of the present disclosure.
FIG. 7 is a perspective structural schematic view of a second sleeve of the beverage dispensing device according to some embodiments of the present disclosure.
FIG. 8 is a perspective structural schematic view of a first sleeve of the beverage dispensing device according to some embodiments of the present disclosure.

### DETAILED DESCRIPTION

The technical solutions in the embodiments of the present disclosure may be clearly and completely described below in conjunction with the accompanying drawings in the embodiments of the present disclosure. Obviously, the described embodiments are only a part of the embodiments of the present disclosure, and not all of them. Based on the embodiments in the present disclosure, all other embodiments obtained by those skilled in the art without making creative labor fall within the scope of the present disclosure.

It should be noted that when the embodiments in the present disclosure are described by involving the "first", the "second", and so on, the "first", the "second", and so on are only used for descriptive purposes, and shall not be interpreted as indicating or implying relative importance thereof or implicitly specifying the number of technical features. Therefore, a feature defined with the "first" or the "second" may include at least one such feature, explicitly or implicitly. In addition, technical solutions of various embodiments may be combined with each other, but only on the basis that the combination can be achieved by any ordinary skilled person in the art. When a combination results in contradictory or is unachievable, the combination shall be considered as not existing and is not included in the scope of the present disclosure.

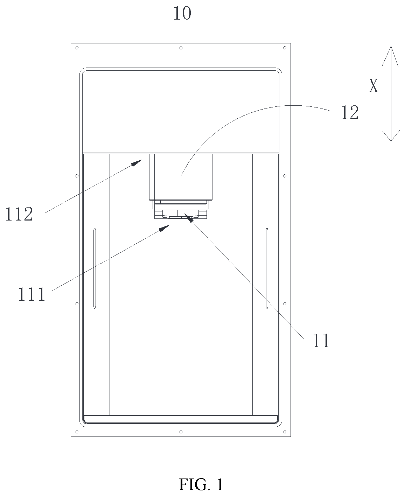

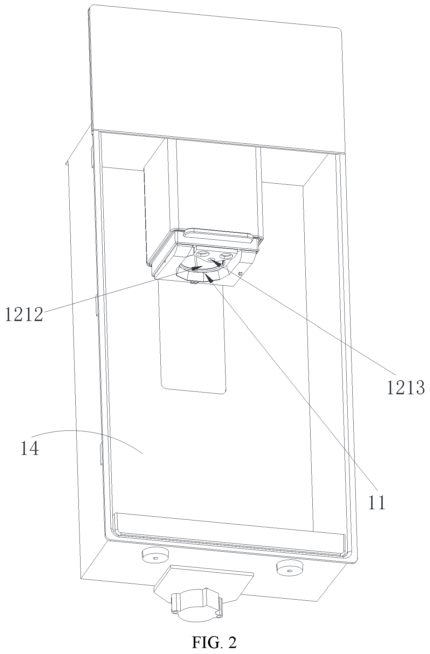

As shown in FIGS. 1 to 2, FIG. 1 is a front structural schematic view of a beverage dispensing device according to some embodiments of the present disclosure. FIG. 2 is a bottom structural schematic view of the beverage dispensing device according to some embodiments of the present disclosure.

A beverage dispensing device 10 may be provided by some embodiments of the present disclosure. The beverage dispensing device 10 may include a beverage outlet 11 and a moving assembly 12. The beverage outlet 11 may be configured to dispense a beverage to a container. The beverage may include at least one of a first type of beverage ingredient and a second type of beverage ingredient. The moving assembly 12 may be connected to the beverage outlet 11. The moving assembly 12 may be configured to drive the beverage outlet 11 to move close to or away from the container.

It can be known from the above-mentioned structure that when the at least one of the first type of beverage ingredient and the second type of beverage ingredient is taken/retrieved by the user, the moving assembly 12 may drive the beverage outlet 11 to move close to the container, such that a distance between the beverage outlet 11 and the container may be reduced. In this case, it may be possible to prevent the at least one of the first type of beverage ingredient and the second type of beverage ingredient from splashing or overflowing when the at least one of the first type of beverage ingredient and the second type of beverage ingredient is input into the container. After the user finishes taking the at least one of the first type of beverage ingredient and the second type of beverage ingredient, the moving assembly 12 may drive the beverage outlet 11 to move away from the container, such that the distance between the beverage outlet 11 and the container may be increased. In this case, it may be possible to prevent the user's hand from touching the beverage outlet 11 when the user takes out the container. On the one hand, it may not affect a process of taking out the container by the user. On the other hand, it may also prevent bacteria from remaining on the beverage outlet 11 after the hand touches the beverage outlet 11, such that it may be possible to prevent the bacteria from entering the container along with the first type of beverage ingredient or the second type of beverage ingredient when the user takes/retrieves the first type of beverage ingredient or the second type of beverage ingredient next time, thereby improving the user's experience. Therefore, the moving assembly 12 may be capable of driving the beverage outlet 11 to move close to or away from the container, such that it may be possible to prevent the at least one of the first type of beverage ingredient and the second type of beverage ingredient from splashing or overflowing when the user takes the at least one of the first type of beverage ingredient and the second type of beverage ingredient, thereby improving the user's experience. In addition, it may also be possible to prevent the user's hand from touching the beverage outlet 11 after the user finishes taking the at least one of the first type of beverage ingredient and the second type of beverage ingredient, thereby improving the user's experience.

It should be noted that the first type of beverage ingredient may include an ingredient with a fixed shape, an elastic ingredient, and an ingredient with poor fluidity, such as ice cubes, crushed ice, red beans, mung beans, peanuts, pearls in bubble tea, coconut jelly, taro balls, milk jelly, jelly, herbal jelly, fruit puree, taro puree, ice cream, puffed products, baked products, etc. The second type of beverage ingredient may include an ingredient with high fluidity, such as water, fruit juice, milk, coffee, cola, soybean milk, etc., which are not limited herein.

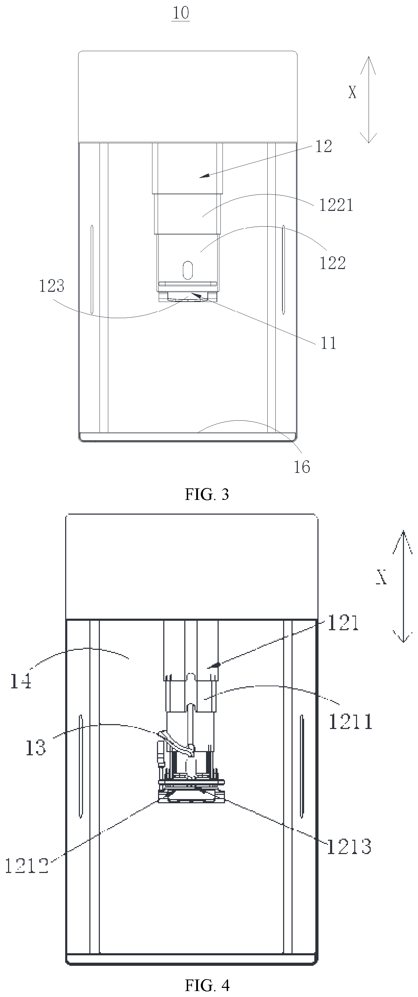

As shown in FIGS. 1 to 4, FIG. 3 is a front structural schematic view of a beverage outlet of the beverage dispensing device in an extended state according to some embodiments of the present disclosure. FIG. 4 is a partial structural schematic view of the beverage outlet of the beverage dispensing device in the extended state according to some embodiments of the present disclosure.

In some embodiments, the beverage outlet 11 may have a movement track (not shown) extending along a first direction X. When the container is placed below the beverage outlet 11, the movement track may have a first end 111 close to the container and a second end 112 away from the container in the first direction X. When the user takes the at least one of the first type of beverage ingredient and the second type of beverage ingredient, the beverage outlet 11 may move to the first end 111 close to the container along the first direction X within the movement track. At this time, the distance between the container and the beverage outlet 11 may be increased, such that it may be possible to prevent the at least one of the first type of beverage ingredient and the second type of beverage ingredient from splashing or overflowing when the at least one of the first type of beverage ingredient and the second type of beverage ingredient is dispensed from the beverage outlet 11 into the container. After the user finishes taking the at least one of the first type of beverage ingredient and the second type of beverage ingredient, the beverage outlet 11 may move to the second end 112 away from the container along the first direction X within the movement track. At this time, the distance between the container and the beverage outlet 11 may be decreased, such that it may be possible to prevent the user's hand from touching the beverage outlet 11 when the user takes the first type of beverage ingredient, thereby improving the user's experience.

It should be noted that during use, the user may dispense only the first type of beverage ingredient from the beverage outlet 11. Alternatively, the user may dispense only the second type of beverage ingredient from the beverage outlet 11. Alternatively, the user may dispense both the first type of beverage ingredient and the second type of beverage ingredient from the beverage outlet 11 at the same time, which is not limited herein. In addition, the beverage dispensing device 10 may be a water dispenser, a beverage dispenser, or a refrigeration device such as a refrigerator, which is not limited herein.

In some embodiments of the present disclosure, the moving assembly 12 may include a first sleeve group 121. The first sleeve group 121 may include at least two first sleeves 1211 sleeved hierarchically. A corresponding one of the at least two first sleeves 1211 disposed at the outermost side or a corresponding one of the at least two first sleeves 1211 disposed at the innermost side may be fixedly disposed at the second end 112. The remaining ones of the at least two first sleeves 1211 may be movable along the first direction X to perform telescopic movement. The first sleeve 1211 fixedly disposed at the second end 112 may be a first fixed sleeve. A first sleeve 1211 of the first sleeve group 121 that is away from the first fixed sleeve may be a first movable sleeve. The beverage outlet 11 may be disposed on the first movable sleeve. In some embodiments, when the corresponding one of the at least two first sleeves 1211 disposed at the outermost side is fixedly disposed at the second end 112, the corresponding one of the at least two first sleeves 1211 disposed at the outermost side may be the first fixed sleeve, that is, the first sleeve 1211 farthest from the container may be the first fixed sleeve. The remaining ones of the at least two first sleeves 1211 may be movable along the first direction X to perform telescopic movement. The corresponding one of the at least two first sleeves 1211 disposed at the innermost side may be the first movable sleeve, that is, the first sleeve 1211 closest to the container may be the first movable sleeve. Therefore, when the user takes the at least one of the first type of beverage ingredient and the second type of beverage ingredient, the first movable sleeve may extend toward the first end 111 close to the container. At this time, it may be possible to reduce an occurrence of splashing or overflowing when the user takes the at least one of the first type of beverage ingredient and the second type of beverage ingredient. After the user finishes taking the at least one of the first type of beverage ingredient and the second type of beverage ingredient, the first movable sleeve may retract from the first end 111 close to the container toward the second end 112 away from the container. At this time, it may be possible to prevent the user's hand from touching the beverage outlet 11 after the user finishes taking the at least one of the first type of beverage ingredient and the second type of beverage ingredient, thereby improving the user's experience. The first fixed sleeve may be fixed at the second end 112 all the time. Therefore, during the expansion and contraction of the first sleeve group 121, the first sleeve group 121 may remain relatively fixed to the second end 112 away from the container, such that an entire expansion and contraction process may be relatively more stable.

When the corresponding one of the at least two first sleeves 1211 disposed at the outermost side is fixedly disposed at the second end 112, the corresponding one of the at least two first sleeves 1211 disposed at the outermost side may be the first fixed sleeve. The remaining ones of the at least two first sleeves 1211 may be movable along the first direction X to perform telescopic movement, that is, the corresponding one of the at least two first sleeves 1211 disposed at the innermost side may be the first movable sleeve. Therefore, when the user takes the at least one of the first type of beverage ingredient and the second type of beverage ingredient, the first movable sleeve may extend toward the first end 111 close to the container. At this time, it may be possible to reduce the occurrence of splashing or overflowing when the user takes the at least one of the first type of beverage ingredient and the second type of beverage ingredient. After the user finishes taking the at least one of the first type of beverage ingredient and the second type of beverage ingredient, the first movable sleeve may retract from the first end 111 close to the container toward the second end away from the container. At this time, it may be possible to prevent the user's hand from touching the beverage outlet 11 after the user finishes taking the at least one of the first type of beverage ingredient and the second type of beverage ingredient, thereby improving the user's experience. The corresponding one of the at least two first sleeves 1211 disposed at the innermost side, i.e., the first fixed sleeve, may be fixed at the second end 112 all the time. Therefore, during the expansion and contraction of the first sleeve group 121, the first sleeve group 121 may remain relatively fixed to the second end 112 away from the container, such that an entire expansion and contraction process may be relatively more stable.

In some embodiments of the present disclosure, a delivery channel (not shown) may be defined inside the first sleeve group 121. The beverage outlet 11 may include an outlet 1212 for the first type of beverage ingredient. The outlet 1212 for the first type of beverage ingredient may be defined at a bottom of the first movable sleeve. In some embodiments, since the first sleeve group 121 may haves a hollow structure therein, a delivery channel may be defined. When the user takes the first type of beverage ingredient, the first type of beverage ingredient may move from the delivery channel toward the outlet 1212 for the first type of beverage ingredient, and the first type of beverage ingredient may be dispensed from the outlet 1212 for the first type of beverage ingredient. Therefore, with the arrangement of the structure, it may not only facilitate the user to take the at least one of the first type of beverage ingredient and the second type of beverage ingredient through the expansion and contraction of the first sleeve group 121, such that it may be possible to prevent the at least one of the first type of beverage ingredient and the second type of beverage ingredient from splashing or overflowing, thereby improving the user's experience. In addition, the delivery channel defined by the first sleeve group 121 which may have the hollow structure therein may facilitate the dispense of the first type of beverage ingredient when the user takes the first type of beverage ingredient, such that the process of dispensing the first type of beverage ingredient may be relatively smoother.

In some embodiments, when the first sleeve group 121 is in an extended state, an inner diameter of the delivery channel may be gradually increased or decreased in a direction close to the beverage outlet 11. In some embodiments, when the corresponding one of the at least two first sleeves 1211 disposed at the innermost side is the first fixed sleeve, and the remaining ones of the at least two first sleeves 1211 extend toward the end close to the container along the first direction X, the inner diameter of the delivery channel may be gradually increased in the direction close to the beverage outlet 11, such that it may be possible to prevent the first type of beverage ingredient from being stuck through the structure. When the corresponding one of the at least two first sleeves 1211 disposed at the outermost side is the first fixed sleeve, and the remaining ones of the at least two first sleeves 1211 extend toward the end close to the container along the first direction X, the inner diameter of the delivery channel may be gradually decreased in the direction close to the beverage outlet 11, such that it may be possible to gather a delivery path of the first type of beverage ingredient through the structure.

In some embodiments of the present disclosure, the moving assembly 12 may further include a second sleeve group 122. The second sleeve group 122 may be sleeved outside the first sleeve group 121. The second sleeve group 122 may include at least two second sleeves 1221 sleeved hierarchically. A corresponding one of the at least two second sleeves 1221 disposed at the outermost side or a corresponding one of the at least two second sleeves 1221 disposed at the innermost side may be fixedly disposed at the second end 112, and the remaining ones of the at least two second sleeves 1221 may be movable along the first direction X. The corresponding one of the at least two second sleeves 1221 fixedly disposed at the second end 112 may be a second fixed sleeve. A second sleeve 1221 of the second sleeve group 122 that is farthest from the second fixed sleeve may be a second movable sleeve. The second movable sleeve may be relatively fixed to the first movable sleeve. In some embodiments, when the corresponding one of the at least two second sleeves 1221 disposed at the outermost side is fixedly disposed at the second end 112, that is, when the corresponding one of the at least two second sleeves 1221 disposed at the outermost side is the second fixed sleeve, the second sleeve 1221 farthest from the second fixed sleeve is the second movable sleeve, and the second movable sleeve is the corresponding one of the at least two second sleeves 1221 disposed at the innermost side. When the user takes the at least one of the first type of beverage ingredient and the second type of beverage ingredient, since the first movable sleeve and the second movable sleeve are fixed relative to each other, as the first movable sleeve extends toward the first end 111, the first movable sleeve may drive the second movable sleeve to extend toward the first end 111, and other second sleeves 1221 disposed between the second fixed sleeve and the second movable sleeve may extend toward the first end 111 under an action of the second movable sleeve. When both the second sleeve group 122 and the first sleeve group 121 extend toward the first end 111, a distance between the first sleeve group 121 and the container and a distance between the second sleeve group 122 and the container may be reduced, such that when the at least one of the first type of beverage ingredient and the second type of beverage ingredient is dispensed, it may be possible to reduce the occurrence of splashing or overflowing of the at least one of the first type of beverage ingredient and the second type of beverage ingredient, thereby improving the user's experience. In some embodiments, the corresponding one of the at least two second sleeves 1221 disposed at the outermost side may be fixedly disposed at the second end 112, that is, the second fixed sleeve may be fixedly disposed at the second end 112, such that the second sleeve group 122 may telescope more stably.

When the corresponding one of the at least two second sleeves 1221 disposed at the innermost side is fixedly disposed at the second end 112, that is, when the corresponding one of the at least two second sleeves 1221 disposed at the innermost side is the second fixed sleeve, the second sleeve 1221 farthest from the second fixed sleeve may be the second movable sleeve, and the second movable sleeve may be the corresponding one of the at least two second sleeves 1221 disposed at the outermost side. When the user takes the at least one of the first type of beverage ingredient and the second type of beverage ingredient, since the first movable sleeve and the second movable sleeve are fixed relative to each other, as the first movable sleeve extends toward the first end 111, the first movable sleeve may drive the second movable sleeve to extend toward the first end 111, and other second sleeves 1221 disposed between the second fixed sleeve and the second movable sleeve may extend toward the first end 111 under an action of the second movable sleeve. When both the second sleeve group 122 and the first sleeve group 121 extend toward the first end 111, a distance between the first sleeve group 121 and the container and a distance between the second sleeve group 122 and the container may be reduced, such that when the at least one of the first type of beverage ingredient and the second type of beverage ingredient is dispensed, it may be possible to reduce the occurrence of splashing or overflowing of the at least one of the first type of beverage ingredient and the second type of beverage ingredient, thereby improving the user's experience. In some embodiments, the corresponding one of the at least two second sleeves 1221 disposed at the innermost side may be fixedly disposed at the second end 112, that is, the second fixed sleeve may be fixedly disposed at the second end 112, such that the second sleeve group 122 may telescope more stably.

It should be noted that the relative fixation between the first fixed sleeve and the second fixed sleeve may mean that a relative positional relationship between the first fixed sleeve and the second fixed sleeve may remain unchanged. The relative fixation between the first movable sleeve and the second movable sleeve may mean that a relative positional relationship between the first movable sleeve and the second movable sleeve may remain unchanged when the first movable sleeve and the second movable sleeve move synchronously.

In another embodiment of the present disclosure, the at least two first sleeves 1211 and the at least two second sleeves 1221 may be arranged in one-to-one correspondence. The beverage dispensing device may further include at least two connecting plates (not shown). The at least two connecting plates, the at least two first sleeves 1211, and the at least two second sleeves 1221 may be arranged in one-to-one correspondence. A corresponding one of the at least two connecting plates may be connected to a corresponding one of the at least two first sleeves 1211 and a corresponding one of the at least two second sleeves 1221. Alternatively, the corresponding one of the at least two connecting plates may be integrally formed with the corresponding one of the at least two first sleeves 1211 and the corresponding one of the at least two second sleeves 1221. By arranging the at least two first sleeves 1211 and the at least two second sleeves 1221 in one-to-one correspondence and connecting the corresponding one of the at least two first sleeves 1211 to the corresponding one of the at least two second sleeves 1221 through the corresponding one of the at least two connecting plates, the at least two first sleeves 1211 and the at least two second sleeves 1221 may telescope synchronously as an integral structure, thereby improving the expansion and contraction stability of the first sleeve group 121 and the second sleeve group 122. When the corresponding one of the at least two first sleeves 1211, the corresponding one of the at least two connecting plates, and the corresponding one of the at least two second sleeves 1221 are integrally formed, the production and assembly efficiency may be improved.

In some embodiments, in order to facilitate the dispensing of the second type of beverage ingredient, the beverage outlet 11 may further include an outlet 1213 for the second type of beverage ingredient. The beverage dispensing device 10 may further include a dispensing pipe 13. The dispensing pipe 13 may be defined an outer side of the first sleeve group 121. The outlet 1213 for the second type of beverage ingredient may be defined at an output end or a dispensing end of the dispensing pipe 13. The output end of the dispensing pipe 13 may be relatively fixed to the first movable sleeve or the second movable sleeve. In some embodiments, when the user takes the second type of beverage ingredient, the second type of beverage ingredient flows in the dispensing pipe 13. When the second type of beverage ingredient flows to the output end of the dispensing pipe 13, the second type of beverage ingredient is dispensed from the outlet 1213 for the second type of beverage ingredient. When the output end of the dispensing pipe 13 is relatively fixed to the first movable sleeve, the first movable sleeve may extend from the second end 112 to the first end 111 when the user takes the second type of beverage ingredient, such that the output end of the dispensing pipe 13 may move close to the container. Therefore, it may be possible to reduce the occurrence of splashing or overflowing when the second type of beverage ingredient flows into the container, thereby improving the user's operation experience. When the output end of the dispensing pipe 13 is relatively fixed to the second movable sleeve, the second movable sleeve may extend from the second end 112 to the first end 111 when the user takes the second type of beverage ingredient, such that the output end of the dispensing pipe 13 may move close to the container. Therefore, it may be possible to reduce the occurrence of splashing or overflowing when the second type of beverage ingredient flows into the container, thereby improving the user's operation experience.

In some embodiments of the present disclosure, the dispensing pipe 13 may be disposed at an inner side or an outer side of the first sleeve group 121. In some embodiments, the dispensing pipe 13 may be disposed between the first sleeve group 121 and the second sleeve group 122. At this time, the second sleeve group 122 may be configured to shield and protect the first sleeve group 121, the dispensing pipe 13 disposed between the first sleeve group 121 and the second sleeve group 122, and other structural components. In some embodiments, the dispensing pipe 13 may also be disposed at the inner side of the first sleeve group 121. At this time, the first sleeve group 121 may still be configured to shield and protect the dispensing pipe 13. In some embodiments, the dispensing pipe 13 may also be disposed at the outer side of the second sleeve group 122. At this time, the user may observe a specific dispensing situation of the second type of beverage ingredient at any time, such that the usage experience may be improved.

In some embodiments, an embedding groove may be defined on the first sleeve group 121. The dispensing pipe 13 may be embedded in the embedding groove. At this time, the first sleeve group 121 not only may be configured to shield and protect the dispensing pipe 13, but also may be configured to limit the dispensing pipe 13 due to a case where the dispensing pipe 13 is embedded in the embedding groove, such that it may be improve the stability of the structure of the dispensing pipe 13 during an entire usage process.

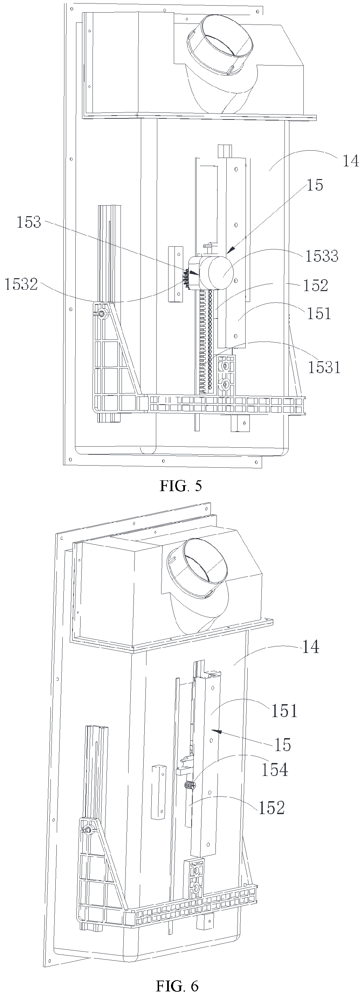

As shown in FIGS. 1 to 5, FIG. 5 is a rear structural schematic view of the beverage dispensing device according to some embodiments of the present disclosure.

In some embodiments of the present disclosure, the beverage dispensing device 10 may further include a bearing frame 14. The bearing frame 14 may be configured to support the first sleeve group 121 and the second sleeve group 122. The moving assembly 12 may further include a driving mechanism 15. The driving mechanism 15 may be configured to drive the first sleeve group 121 to be movable along the first direction X. The driving mechanism 15 may include a guide rail 151, a sliding block 152, and a power member 153. The guide rail 151 may be disposed on the bearing frame 14. The guide rail 151 may extend along the first direction X. The sliding block 152 may be movably disposed on the guide rail 151 along the first direction X. The sliding block 152 may be relatively fixed to the second movable sleeve. The power member 153 may be configured to drive the sliding block 152 to move. Since both the first fixed sleeve and the second fixed sleeve are fixed to the bearing frame 14, the first sleeve group 121 and the second sleeve group 122 may be stably supported by arranging the bearing frame 14. By arranging the driving mechanism 15, the first sleeve group 121 may be driven to be movable along the first direction X, for example, the first sleeve group 121 may be driven to move in a direction close to the first end 111 of the container, and the first sleeve group 121 may be driven to move in a direction away from the second end 112 of the container. When the first sleeve group 121 is driven to move by the driving mechanism 15, the power member 153 may be configured to provide power for the driving mechanism 15. At this time, the power member 153 may drive the sliding block 152 to move along the guide rail 151 in the first direction X. At the same time, the guide rail 151 may also be configured to limit the sliding block 152, such that it may be possible to prevent the sliding block 152 from deviating from the guide rail 151 during a movement process of the guide rail 151. Therefore, it may be possible to reduce an abnormal movement of the moving assembly 12, thereby improving the user's experience.

In some embodiments, the power member 153 may include a lifting rack 1531, a driving gear 1532, and a motor 1533. The lifting rack 1531 may be disposed along the first direction X and relatively fixed to the sliding block 152. The driving gear 1532 may be engaged with the lifting rack 1531. The motor 1533 may be disposed on the bearing frame 14. An output end of the motor 1533 may be connected to the driving gear 1532. By connecting the output end of the motor 1533 to the driving gear 1532, the motor 1533 may be capable of driving the driving gear 1532 to rotate forward and backward, such that it may be possible to drive the lifting rack 1531 to reciprocate along the first direction X. Since the lifting rack 1531 is relatively fixed to the sliding block 152, when the motor 1533 drives the driving gear 1532 to rotate forward and backward to drive/enable the lifting rack 1531 to reciprocate along the first direction X, the sliding block 152 may also move in response to the reciprocating movement of the lifting rack 1531 along the first direction X, such that the sliding block 152 may move along the guide rail 151 in the first direction X under the action of the motor 1533. Through mutual cooperation between the lifting rack 1531, the driving gear 1532, and the motor 1533, the reciprocating movement of the sliding block 152 in the first direction X may be implemented. The above-mentioned structure may be not only more labor-saving, but also relatively simple.

As shown in FIGS. 1 to 6, FIG. 6 is a rear structural schematic view of the beverage dispensing device according to some embodiments of the present disclosure.

In another embodiment of the present disclosure, the beverage dispensing device 10 may further include a bearing frame 14. The bearing frame 14 may be configured to support the first sleeve group 121 and the second sleeve group 122. The moving assembly 12 may further include a guide rail 151, a sliding block 152, and a damping screw 154. The guide rail 151 may be disposed on the bearing frame 14 and may extend along the first direction X. The sliding block 152 may be movably disposed on the guide rail 151 along the first direction X. The sliding block 152 may be relatively fixed to the second movable sleeve. The damping screw 154 may be threadedly connected to the sliding block 152. The damping screw 154 may be configured to abut against the guide rail 151 to adjust an interaction force between the damping screw 154 and the guide rail 151. An abutting force between the damping screw 154 and the sliding block 152 should be adjusted to balance the gravity of the first sleeve group 121 and the second sleeve group 122. When no external force pulls the second sleeve 1221, the first sleeve group 121 and the second sleeve group 122 may maintain a current expansion and contraction state, which may not affect the user's use. When it is necessary to stretch or retract the beverage outlet 11, it may be only necessary to pull the second sleeve 1221 to overcome the abutting force between the damping screw 154 and the guide rail 151, such that the first sleeve group 121 and the second sleeve group 122 may perform expansion and contraction. An abutting force between the damping screw 154 and the guide rail 151 may be adjusted by rotating the damping screw 154, and the structure may be simple and convenient.

In some embodiments, when the user takes the at least one of the first type of beverage ingredient and the second type of beverage ingredient, the user may pull the second sleeve 1221 toward the first end 111, and the sliding block 152 may be relatively fixed to the second movable sleeve. Therefore, when the sliding block 152 moves along the first direction X on the guide rail 151, the second movable sleeve may also move along the first direction X in response to the movement of the sliding block 152. Correspondingly, the first movable sleeve may also move in response to the movement of the second movable sleeve. When the second movable sleeve is adjusted to a position required by the user, the user may release the second movable sleeve. The damping screw 154 and the sliding block 152 may remain relatively stationary. At this time, the sliding block 152 may stop moving. Since the second movable sleeve is relatively fixed to the sliding block 152, the second movable sleeve may stop moving and remain at the position required by the user. Correspondingly, the first movable sleeve may also stop moving in response to the stop of the second movable sleeve.

The above-mentioned manual driving structure may have advantages of a small number of structural components and relatively simple operation. The damping screw 154 may be threadedly connected to the sliding block 152, such that it may be possible to increase the abutting force between the damping screw 154 and the guide rail 151 by adjusting a threaded connection position between the damping screw 154 and the sliding block 152. In this way, the first sleeve group 121 and the second sleeve group 122 may not fall due to the gravity of the first sleeve group 121 and the second sleeve group 122, such that it may be possible to ensure the stability of the structure.

As shown in FIGS. 1 to 4, in some embodiments, in order to improve the user's operation experience, the moving assembly 12 may further include a handle 123. The handle 123 may be disposed at an outer side wall of the corresponding one of the at least two second sleeves 1221 disposed at the innermost side. By arranging the handle 123, the user may save more effort in a process of adjusting a position of the beverage outlet 11. In some embodiments, when the user needs to adjust the position of the beverage outlet 11, the user may hold the handle 123, apply a certain external force to the handle 123, and adjust tightness between the damping screw 154 and the sliding block 152, such that a position of the second movable sleeve may be adjusted, and the position of the beverage outlet 11 may be further adjusted. In this way, the beverage outlet 11 may be disposed at an optimal position when the user takes the at least one of the first type of beverage ingredient and the second type of beverage ingredient. At this time, it may be possible to reduce the occurrence of splashing or overflowing of the at least one of the first type of beverage ingredient and the second type of beverage ingredient, such that the user's experience may be improved. In addition, the handle 123 may not only facilitate the user to adjust the position of the beverage outlet 11 by himself, but also save more effort when the user adjusts the position of the beverage outlet 11, such that the user's entire operation experience may be improved.

In some embodiments of the present disclosure, the beverage dispensing device 10 may further include a bearing platform 16. The bearing platform 16 may be configured to carry the container. The container may be configured to receive the beverage. The beverage outlet 11 may be disposed above the bearing platform 16. When the user takes the at least one of the first type of beverage ingredient and the second type of beverage ingredient, the container may be placed on the bearing platform 16, and the at least one of the first type of beverage ingredient and the second type of beverage ingredient may be dispensed through the beverage outlet 11, such that the at least one of the first type of beverage ingredient and the second type of beverage ingredient may be dispensed quickly. The user does not need to hold the container, and the entire process of taking the at least one of the first type of beverage ingredient and the second type of beverage ingredient may be more labor-saving.

In some embodiments, a micro switch, a pressure sensor, etc., may be disposed below the bearing platform 16. Alternatively, an ultrasonic sensor, an infrared pair tube, etc., may be disposed on the bearing frame 14 or disposed at a side wall of the beverage dispensing device 10, so as to detect whether the container is placed on the bearing platform 16. When no container is detected, it may stop the dispensing of the at least one of the first type of beverage ingredient and the second type of beverage ingredient, thereby reducing an occurrence of leakage of the at least one of the first type of beverage ingredient and the second type of beverage ingredient due to accidental touch or sudden removal of the container.

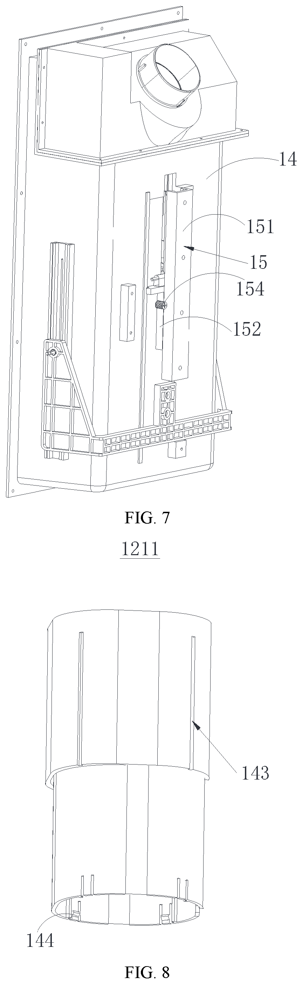

As shown in FIGS. 1 to 7, FIG. 7 is a perspective structural schematic view of a second sleeve of the beverage dispensing device according to some embodiments of the present disclosure.

In some embodiments of the present disclosure, in order to facilitate a movement of the second sleeve group 122 along the first direction X, a guide groove 141 may be defined at an inner wall of the second sleeve 1221. A guide block 142 may be disposed at an outer wall of the second sleeve 1221 and matched with the guide groove 141. The guide block 142 may slide in the guide groove 141 to drive the at least two second sleeves 1221 to be movable along the first direction X to perform telescopic movement. In some embodiments, through the relative movement of the guide block 142 in the guide groove 141, the at least two second sleeves 1221 may be driven to move along the first direction X to an extended limit state or a contracted limit state. By arranging the guide block 142 and the guide groove 141, on the one hand, it may be possible to limit the movement of the at least two second sleeves 1221, so as to prevent the at least two second sleeves 1221 from displacing in other directions. On the other hand, the guide block 142 may slide in the guide groove 141, such that it may be possible to reduce a contact area between the guide block 142 and the guide groove 141. Therefore, it may be possible to reduce a friction force between the guide block 142 and the guide groove 141, such that an entire sliding process may be more labor-saving.

It should be noted that in some embodiments of the present disclosure, the guide groove 141, which may extend along the first direction X and may be defined on the second sleeve 1221, may be defined on an outer wall surface of the second sleeve 1221. The guide block 142 may be disposed on an inner wall surface of a next adjacent second sleeve 1221. At this time, the guide block 142 disposed on an inner wall surface of the next adjacent second sleeve 1221 may be engaged with the guide groove 141 defined on the outer wall surface, such that it may be possible limit the movement of the second sleeve 1221 along the first direction X. In addition, the structure may further reduce the exposure of the guide block 142, thereby ensuring the aesthetics of the structure. Of course, in some other embodiments, the guide groove 141 may be defined on an inner wall surface of the second sleeve 1221, and the guide block 142 may be disposed on an outer wall surface of the next adjacent second sleeve 1221. At this time, the guide groove 141 defined on the inner wall surface of the adjacent second sleeve 1221 may be engaged with the guide block 142 disposed on the outer wall surface of the next adjacent second sleeve 1221, such that it may also be possible to limit the movement of the second sleeve 1221 along the first direction X, which is not limited herein.

As shown in FIGS. 1 to 8, FIG. 8 is a perspective structural schematic view of a first sleeve of the beverage dispensing device according to some embodiments of the present disclosure.

In some embodiments of the present disclosure, a limiting groove 143 may be defined on the first sleeve 1211 and may extend along the first direction X. A limiting block 144 may be disposed on an adjacent first sleeve 1211 and matched with the limiting groove 143. When the at least two first sleeves 1211 are movable to an extended state, the limiting block 144 may slide to one end of the limiting groove 143. When the at least two first sleeves 1211 are movable to a contracted state, the limiting block 144 may slide to the other end of the limiting groove 143. In some embodiments, when the at least two first sleeves 1211 are movable to the extended limit state, the limiting block 144 may slide to the one end of the limiting groove 143. When the at least two first sleeves 1211 are movable to the contracted limit state, the limiting block 144 may slide to the other end of the limiting groove 143. In some embodiments, the limiting groove 143 extending along the first direction X may be defined on the first sleeve 1211, and the limiting block 144 matched with the limiting groove 143 may be disposed on the adjacent first sleeve 1211, such that the limiting groove 143 may limit the limiting block 144 when the at least two first sleeves 1211 move along the first direction X. Therefore, it may be possible to prevent the first sleeve group 121 from rotating relative to each other, such that it may be possible to ensure/improve the stability of the entire structure. Therefore, the limiting groove 143 and the limiting block 144 may cooperate with each other, such that it may be possible to reduce an occurrence of no displacement in other directions when the first sleeve group 121 is movable along the first direction X. Therefore, it may be possible to ensure the stability of the first sleeve group 121 when the first sleeve group 121 is movable along the first direction X. At the same time, the limiting block 144 may slide in the limiting groove 143, such that it may be possible to reduce a contact area between the limiting block 144 and the limiting groove 143. Therefore, it may be possible to reduce a friction force between the limiting block 144 and the limiting groove 143, such that the sliding of the limiting block 144 in the limiting groove 143 may also be more labor-saving.

It should be noted that in some embodiments of the present disclosure, the guide groove 143, which may extend along the first direction X and may be defined on the first sleeve 1211, may be defined on an outer wall surface of the first sleeve 1211. The guide block 144 may be disposed on an inner wall surface of a previous adjacent first sleeve 1211. At this time, the guide block 144 disposed on the inner wall surface of the previous adjacent first sleeve 1211 may be engaged with the guide groove 143 defined on the outer wall surface, such that it may be possible limit the movement of the first sleeve 1211 along the first direction X. Of course, in some other embodiments, the guide groove 143 may be further defined on an inner wall surface of the first sleeve 1211, and the guide block 144 may be disposed on an outer wall surface of a next adjacent inner first sleeve 1211. At this time, the guide groove 143 defined on the inner wall surface of the first sleeve 1211 may be engaged with the guide block 144 disposed on the outer wall surface of the next adjacent inner first sleeve 1211, such that it may also be possible to limit the movement of the first sleeve 1211 along the first direction X, which is not limited herein.

The above are only the embodiments of the present disclosure, and are not intended to limit the patent scope of the present disclosure. Any equivalent structure or equivalent process transformation made by using the contents of the specification and drawings of the present disclosure, or directly or indirectly applied in other related technical fields, shall be similarly included in the patent protection scope of the present disclosure.

## Claims

1. A beverage dispensing device, comprising:
a beverage outlet, configured to dispense a beverage to a container, wherein the beverage comprises at least one of a first type of beverage ingredient and a second type of beverage ingredient; and
a moving assembly, connected to the beverage outlet, wherein the moving assembly is configured to drive the beverage outlet to move toward or away from the container.

2. The beverage dispensing device according to claim 1, wherein the beverage outlet has a movement track extending along a first direction, and in a case where the container is placed below the beverage outlet, the movement track has a first end close to the container and a second end away from the container in the first direction.

3. The beverage dispensing device according to claim 2, wherein the moving assembly comprises a first sleeve group comprising at least two first sleeves sleeved hierarchically, wherein:
a corresponding one of the at least two first sleeves disposed at the outermost side or a corresponding one of the at least two first sleeves disposed at the innermost side is fixedly disposed at the second end, and the remaining ones of the at least two first sleeves are movable along the first direction to perform telescopic movement; and
the first sleeve fixedly disposed at the second end is a first fixed sleeve, a first sleeve of the first sleeve group that is away from the first fixed sleeve is a first movable sleeve, and the beverage outlet is disposed on the first movable sleeve.

4. The beverage dispensing device according to claim 3, wherein a delivery channel is defined inside the first sleeve group, the beverage outlet comprises an outlet for the first type of beverage ingredient, and the outlet for the first type of beverage ingredient is defined at a bottom of the first movable sleeve.

5. The beverage dispensing device according to claim 4, wherein in a case where the first sleeve group is in an extended state, an inner diameter of the delivery channel is gradually increased or decreased in a direction close to the beverage outlet.

6. The beverage dispensing device according to claim 3, wherein the moving assembly further comprises a second sleeve group, sleeved outside the first sleeve group, wherein the second sleeve group comprises at least two second sleeves sleeved hierarchically, wherein:
a corresponding one of the at least two second sleeves disposed at the outermost side or a corresponding one of the at least two second sleeves disposed at the innermost side is fixedly disposed at the second end, and the remaining ones of the at least two second sleeves are movable along the first direction; and
the corresponding one of the at least two second sleeves fixedly disposed at the second end is a second fixed sleeve, a second sleeve of the second sleeve group that is farthest from the second fixed sleeve is a second movable sleeve, and the second movable sleeve is relatively fixed to the first movable sleeve.

7. The beverage dispensing device according to claim 6, wherein the at least two first sleeves and the at least two second sleeves are arranged in one-to-one correspondence, and the beverage dispensing device further comprises at least two connecting plates, wherein:
the at least two connecting plates, the at least two first sleeves, and the at least two second sleeves are arranged in one-to-one correspondence; and
a corresponding one of the at least two connecting plates is connected to a corresponding one of the at least two first sleeves and a corresponding one of the at least two second sleeves, or a corresponding one of the at least two connecting plates is integrally formed with a corresponding one of the at least two first sleeves and a corresponding one of the at least two second sleeves.

8. The beverage dispensing device according to claim 6, wherein the beverage outlet further comprises an outlet for the second type of beverage ingredient, and the beverage dispensing device further comprises a dispensing pipe, wherein:
the outlet for the second type of beverage ingredient is defined at an output end of the dispensing pipe, and the output end of the dispensing pipe is relatively fixed to the first movable sleeve or the second movable sleeve.

9. The beverage dispensing device according to claim 8, wherein:
the dispensing pipe is disposed at an inner side or an outer side of the first sleeve group; or
an embedding groove is defined on the first sleeve group, and the dispensing pipe is embedded in the embedding groove.

10. The beverage dispensing device according to claim 6, wherein the beverage dispensing device further comprises a bearing frame configured to support the first sleeve group and the second sleeve group, and the moving assembly further comprises a driving mechanism configured to drive the first sleeve group to be movable along the first direction, wherein:
the driving mechanism comprises:
a guide rail, disposed on the bearing frame and extending along the first direction;
a sliding block, movably disposed on the guide rail along the first direction, wherein the sliding block is relatively fixed to the second movable sleeve; and
a power member, configured to drive the sliding block to move.

11. The beverage dispensing device according to claim 10, wherein the power member comprises:
a lifting rack, extending along the first direction and relatively fixed to the sliding block;
a driving gear, engaged with the lifting rack; and
a motor, disposed on the bearing frame, wherein an output end of the motor is connected to the driving gear.

12. The beverage dispensing device according to claim 6, wherein:
the beverage dispensing device further comprises a bearing frame configured to support the first sleeve group and the second sleeve group; and
the moving assembly further comprises:
a guide rail, disposed on the bearing frame and extending along the first direction;
a sliding block, movably disposed on the guide rail along the first direction, wherein the sliding block is relatively fixed to the second movable sleeve; and
a damping screw, threadedly connected to the sliding block and configured to abut against the guide rail to adjust an interaction force between the damping screw and the guide rail.

13. The beverage dispensing device according to claim 6, wherein the moving assembly further comprises a handle disposed at an outer side wall of the corresponding one of the at least two second sleeves disposed at the innermost side.

14. The beverage dispensing device according to any one of claims 1-13, further comprising a bearing platform configured to carry the container, wherein the container is configured to receive the beverage, and the beverage outlet is disposed above the bearing platform.
